# EUROPEAN PATENT APPLICATION

(11) **EP 3 664 525 A1**
(43) Date of publication of application: **10.06.2020**
(21) Application number: 17921945.6
(22) Date of filing: 18.08.2017
(51) Int. Cl.: H04W 56/00

(54) **WIRELESS COMMUNICATION METHOD AND DEVICE**

(71) Applicant: GUANGDONG OPPO MOBILE TELECOMMUNICATIONS CORP., LTD., Wusha, Chang'an Dongguan, Guangdong 523860 (CN)
(72) Inventor: ZHANG, Zhi, Dongguan Guangdong 523860 (CN); CHEN, Wenhong, Dongguan Guangdong 523860 (CN)
(74) Representative: Penza, Giancarlo
(86) International application number: PCT/CN2017/098062
(87) International publication number: WO 2019/033396

(57) **Abstract**

Disclosed in an embodiment of the present application are a wireless communication method and device, which may increase the communicative performance in synchronization signal block transmission. The method comprises: a network device indicating to a terminal device the resource positions and/or quantity of synchronization signal blocks sent to a terminal device; the network device sending to the terminal device the synchronization signal blocks of said resource positions and/or said quantity.

## Description

### Technical Field

Embodiments of the present application relate to the field of communications, and more particularly, to a wireless communication method and device.

### Background

In a 5G New Radio (NR) system, a terminal device completes an initial access process by detecting synchronization signal blocks (SS Blocks), and each synchronization signal block may include a Primary Synchronization Signal (PSS), a Secondary Synchronization Signal (SSS), and a Physical Broadcast Channel (PBCH).

In a future NR system, a higher communication performance is required.

Therefore, how to improve the communication performance in an aspect of transmission of synchronous signal blocks is an urgent problem to be solved.

### Summary

In view of this, the embodiments of the present application provide a wireless communication method and device, which may improve communication performance in an aspect of transmission of synchronous signal blocks.

In a first aspect, a wireless communication method is provided. The method includes: a network device indicates to a terminal device resource positions and/or a quantity of synchronization signal blocks sent to the terminal device; and the network device sends the synchronization signal blocks at the resource positions and/or the synchronization signal blocks of the quantity to the terminal device.

Therefore, in the embodiment of the present application, the network device indicates to the terminal device the resource positions and/or the quantity of synchronization signal blocks sent to the terminal device, and the terminal device may receive the synchronization signal blocks at the resource positions and/or the synchronization signal blocks of the quantity, so that it may be achieved that the terminal device does not need to perform detection on all possible synchronization signal blocks.

In combination with the first aspect, in one possible implementation of the first aspect, indicating, by the network device, to the terminal device the resource positions and/or the quantity of the synchronization signal blocks sent to the terminal device, includes: the network device indicates to the terminal device the resource positions and/or the quantity of the sent synchronization signal blocks through first information; wherein the first information carries resource position indices of the sent synchronization signal blocks or identifiers of the sent synchronization signal blocks.

In combination with the first aspect or any one of the above possible implementations, in another possible implementation of the first aspect, indicating, by the network device, to the terminal device the resource positions and/or the quantity of the synchronization signal blocks sent to the terminal device, includes: the network device indicates to the terminal device the resource positions and/or the quantity of the sent synchronization signal blocks through second information; wherein the second information indicates the resource positions and/or the quantity of the synchronization signal blocks sent to the terminal device through indicating whether each preset transmittable synchronization signal block is sent.

In combination with the first aspect or any one of the above possible implementations, in another possible implementation of the first aspect, information for indicating whether the each synchronization signal block is sent in the second information is sequenced according to resource position indices of the synchronization signal blocks or identifiers of the synchronization signal blocks.

In combination with the first aspect or any one of the above possible implementations, in another possible implementation of the first aspect, the method further includes: the network device sends third information to the terminal device, wherein the third information includes configuration information, of resources for random access and/or random access preambles, corresponding to the sent synchronization signal blocks.

In combination with the first aspect or any one of the above possible implementations, in another possible implementation of the first aspect, indicating, by the network device, to the terminal device the resource positions and/or the quantity of the synchronization signal blocks sent to the terminal device, includes: the network device indicates to the terminal device the resource positions and/or the quantity of the sent synchronization signal blocks through fourth information; wherein the fourth information includes information for configuring resources and/or sequences associated with the sent synchronization signal blocks.

In combination with the first aspect or any one of the above possible implementations, in another possible implementation of the first aspect, the network device indicates the positions and/or quantity of the sent synchronization signal blocks through positions of the fourth information in a message to which the fourth information belongs.

In combination with the first aspect or any one of the above possible implementations, in another possible implementation of the first aspect, the method further includes: the network device sends fifth information to the terminal device, wherein the fifth information is used for indicating a mode of a mapping relationship between the resource positions of the synchronization signal blocks and the positions of the fourth information in the message to which the fourth information belongs.

In combination with the first aspect or any one of the above possible implementations, in another possible implementation of the first aspect, the fourth information includes configuration information for configuring random access resources and/or random access preambles for random access of the terminal device, and the resources and/or sequences associated with the synchronization signal blocks are random access resources and/or random access preambles.

In combination with the first aspect or any one of the above possible implementations, in another possible implementation of the first aspect, the fourth information indicates the resource positions of and/or the quantity of the synchronization signal blocks sent to the terminal device through indicating whether each set of resources for random access and/or random access sequences is configured; wherein random access resources and/or sequences in different configured sets are different.

In combination with the first aspect or any one of the above possible implementations, in another possible implementation of the first aspect, information for indicating whether the each set is configured in the fourth information is sequenced in an order of indices of the sets.

In combination with the first aspect or any one of the above possible implementations, in another possible implementation of the first aspect, indicating, by the network device, to the terminal device the resource positions and/or the quantity of the synchronization signal blocks sent to the terminal device, includes: the network device indicates to the terminal device the resource positions and/or the quantity of the sent synchronization signal blocks through information in a physical broadcast channel (PBCH) and a resource position and/or sequence information of a demodulation reference signal (DMRS).

In combination with the first aspect or any one of the above possible implementations, in another possible implementation of the first aspect, the method further includes: the network device receives a message sent by the terminal device in a random access procedure; the network device determines a synchronization signal block selected by the terminal device according to a resource occupied by the message sent by the terminal device in the random access procedure and/or a random access preamble included in the message sent by the terminal device in the random access procedure; the network device sends a downlink signal which is not that of the synchronization signal block according to a sending mode of the synchronization signal block selected by the terminal device.

In combination with the first aspect or any one of the above possible implementations, in another possible implementation of the first aspect, the synchronization signal blocks at different resource positions are sent through different beams.

In a second aspect, a wireless communication method is provided. The method includes: a terminal device determines resource positions and/or a quantity of synchronization signal blocks sent by a network device to the terminal device through information sent by the network device; the terminal device receives the synchronization signal blocks at the resource positions and/or the synchronization signal blocks of the quantity.

Therefore, in the embodiment of the present application, the network device indicates to the terminal device the resource positions and/or the quantity of synchronization signal blocks sent to the terminal device, and the terminal device may receive the synchronization signal blocks at the resource positions and/or the synchronization signal blocks of the quantity, so that it may be achieved that the terminal device does not need to perform detection on all possible synchronization signal blocks.

In combination with the second aspect, in one possible implementation of the second aspect, the network device indicates the quantity of synchronization signal blocks sent to the terminal device through the sent information; receiving, by the terminal device, the synchronization signal blocks at the resource positions and/or the synchronization signal blocks of the quantity, includes: the terminal device receives the synchronization signal blocks of the quantity, and after receiving the synchronization signal blocks of the quantity, stops detection on a possible new synchronization signal block.

In combination with the second aspect or any one of the above possible implementations, in another possible implementation of the second aspect, the network device indicates the resource positions and the quantity of synchronization signal blocks sent to the terminal device through the sent information; receiving, by the terminal device, the synchronization signal blocks at the resource positions and/or the synchronization signal blocks of the quantity, includes: the terminal device receives the synchronization signal blocks of the quantity, and receives the synchronization signal blocks of the quantity only at the indicated resource positions, and stops detection on a possible synchronization signal at another position.

In combination with the second aspect or any one of the above possible implementations, in another possible implementation of the second aspect, the method further includes: the terminal device receives first information sent by the network device; determining, by the terminal device, the resource positions and/or the quantity of the synchronization signal blocks sent by the network device to the terminal device through the information sent by the network device, includes: the terminal device determines the resource positions and/or the quantity of the synchronization signal blocks sent by the network device to the terminal device according to the first information; wherein the first information carries resource position indices or identifiers of the synchronization signal blocks sent by the network device.

In combination with the second aspect or any one of the above possible implementations, in another possible implementation of the second aspect, the method further includes: the terminal device receives second information sent by the network device; determining, by the terminal device, the resource positions and/or the quantity of the synchronization signal blocks sent by the network device to the terminal device through the information sent by the network device, includes: the terminal device determines the resource positions and/or the quantity of the synchronization signal blocks sent by the network device to the terminal device according to the second information; wherein the second information indicates the resource positions and/or the quantity of the synchronization signal blocks sent to the terminal device through indicating whether each preset transmittable synchronization signal block is sent.

In combination with the second aspect or any one of the above possible implementations, in another possible implementation of the second aspect, information for indicating whether the each synchronization signal block is sent in the second information is sequenced according to resource position indices of the synchronization signal blocks or identifiers of the synchronization signal blocks.

In combination with the second aspect or any one of the above possible implementations, in another possible implementation of the second aspect, the method further includes: the terminal device receives third information sent by the network device, wherein the third information includes configuration information, of resources for random access and/or random access preambles, corresponding to the synchronization signal blocks sent by the network device; and the network device performs random access according to the configuration information.

In combination with the second aspect or any one of the above possible implementations, in another possible implementation of the second aspect, the method further includes: the terminal device receives fourth information sent by the network device; determining, by the terminal device, the resource positions and/or the quantity of the synchronization signal blocks sent by the network device to the terminal device through the information sent by the network device, includes: the terminal device determines the resource positions and/or the quantity of the synchronization signal blocks sent by the network device to the terminal device according to the fourth information; wherein the fourth information includes information for configuring resources and/or sequences associated with the sent synchronization signal blocks.

In combination with the second aspect or any one of the above possible implementations, in another possible implementation of the second aspect, the network device indicates the positions and/or the quantity of the sent synchronization signal blocks through positions of the fourth information in a message to which the fourth information belongs.

In combination with the second aspect or any one of the above possible implementations, in another possible implementation of the second aspect, the method further includes: the terminal device receives fifth information sent by the network device, wherein the fifth information is used for indicating a mode of a mapping relationship between the resource positions of the synchronization signal blocks and the positions of the fourth information in the message to which the fourth information belongs; and the mapping relationship is determined according to the fifth information.

In combination with the second aspect or any one of the above possible implementations, in another possible implementation of the second aspect, the fourth information includes configuration information for configuring random access resources and/or random access preambles for random access of the terminal device, and the resources and/or sequences associated with the synchronization signal blocks are random access resources and/or random access preambles.

In combination with the second aspect or any one of the above possible implementations, in another possible implementation of the second aspect, the fourth information indicates the resource positions of and/or the quantity of the synchronization signal blocks sent to the terminal device through indicating whether each set of resources for random access and/or random access sequences is configured; wherein random access resources and/or sequences in different configured sets are different.

In combination with the second aspect or any one of the above possible implementations, in another possible implementation of the second aspect, information for indicating whether the each set is configured in the fourth information is sequenced in an order of indices of the sets.

In combination with the second aspect or any one of the above possible implementations, in another possible implementation of the second aspect, determining, by the terminal device, the resource positions and/or the quantity of synchronization signal blocks sent by the network device to the terminal device through indication of the network device, includes: the terminal device determines the resource positions and/or the quantity of the synchronization signal blocks sent by the network device to the terminal device according to information in a physical broadcast channel (PBCH) and a resource position and/or sequence information of a demodulation reference signal (DMRS) sent by the network device.

In combination with the second aspect or any one of the above possible implementations, in another possible implementation of the second aspect, the method further includes: selecting a synchronization signal block from detected synchronization signal blocks; determining a resource for random access and/or a random access preamble according to the selected synchronization signal block; and performing random access by using the determined resource and/or random access preamble.

In combination with the second aspect or any one of the above possible implementations, in another possible implementation of the second aspect, the synchronization signal blocks at different resource positions are sent through different beams.

In a third aspect, a wireless communication method is provided. The method includes: determining a mapping relationship between synchronization signal blocks and first information; receiving or sending the synchronization signal blocks and/or the first information according to the mapping relationship.

Therefore, in the embodiment of the present application, the network device sends the synchronization signal blocks and/or the first information according to the mapping relationship between the synchronization signal blocks and the first information, the terminal device may receive the synchronization signal blocks and/or the first information according to the mapping relationship between the synchronization signal blocks and the first information, thus being capable of realizing an association between sending and reception of the first information and the synchronization signal blocks and improving the communication performance, for example, avoiding that the terminal receives synchronization signals at all possible positions.

In combination with the third aspect, in one possible implementation of the third aspect, the mapping relationship is a mapping relationship between resource positions of the synchronization signal blocks and the first information.

In combination with the third aspect or any one of the above possible implementations, in another possible implementation of the third aspect, the mapping relationship is a mapping relationship between resource positions of the synchronization signal blocks or identifiers of the synchronization signal blocks and positions of the first information in a message to which the first information belongs.

In combination with the third aspect or any one of the above possible implementations, in another possible implementation of the third aspect, the method is performed by a network device; and the method further includes: sending second information for indicating a mode adopted by the mapping relationship.

In combination with the third aspect or any one of the above possible implementations, in another possible implementation of the third aspect, the method is performed by a terminal device; and the method further includes: receiving second information for indicating a mode adopted by the mapping relationship.

In combination with the third aspect or any one of the above possible implementations, in another possible implementation of the third aspect, the first information includes configuration information for configuring random access resources and/or random access preambles for random access of the terminal device.

In combination with the third aspect or any one of the above possible implementations, in another possible implementation of the third aspect, the first information indicates whether each set of resources for random access and/or random access sequences is configured; wherein random access resources and/or sequences in different configured sets are different.

In combination with the third aspect or any one of the above possible implementations, in another possible implementation of the third aspect, information for indicating whether the each set is configured in the first information is sequenced in an order of indices of the sets.

In combination with the third aspect or any one of the above possible implementations, in another possible implementation of the third aspect, the first information includes information in a physical broadcast channel (PBCH) and a resource position and/or sequence information of a demodulation reference signal (DMRS).

In combination with the third aspect or any one of the above possible implementations, in another possible implementation of the third aspect, the method is performed by a terminal device, and the method further includes: selecting a synchronization signal block from detected synchronization signal blocks; determining a resource for random access and/or a random access preamble according to the selected synchronization signal block; and performing random access by using the determined resource and/or random access preamble.

In combination with the third aspect or any one of the above possible implementations, in another possible implementation of the third aspect, the method is performed by a network device, and the method further includes: the network device receives a message sent by the terminal device in a random access procedure; the network device determines a synchronization signal block selected by the terminal device according to a resource occupied by the message sent by the terminal device in the random access procedure and/or a random access preamble included in the message sent by the terminal device in the random access procedure; the network device sends a downlink signal which is not that of the synchronization signal block according to a sending mode of the synchronization signal block selected by the terminal device.

In combination with the third aspect or any one of the above possible implementations, in another possible implementation of the third aspect, different synchronization signal blocks are sent through different beams.

In a fourth aspect, a network device is provided for performing the method in the first aspect or any possible implementation of the first aspect. Specifically, the network device includes units for performing the method in the first aspect or any possible implementation of the first aspect.

In a fifth aspect, a terminal device is provided for performing the method in the second aspect or any possible implementation of the second aspect. Specifically, the terminal device includes units for performing the method in the second aspect or any possible implementation of the second aspect.

In a sixth aspect, a wireless communication device is provided for performing the method in the third aspect or any possible implementation mode of the third aspect. Specifically, the wireless communication device includes units for performing the method in the third aspect or any possible implementation of the third aspect.

In a seventh aspect, a network device is provided. The network device includes a memory, a processor, an input interface, and an output interface. The memory, the processor, the input interface, and the output interface are connected through a bus system. The memory is used for storing instructions, and the processor is used for executing the instructions stored in the memory to perform the method in the first aspect or any possible implementation of the first aspect.

In an eighth aspect, a terminal device is provided. The terminal device includes a memory, a processor, an input interface, and an output interface. The memory, the processor, the input interface, and the output interface are connected through a bus system. The memory is used for storing instructions, and the processor is used for executing the instructions stored in the memory to perform the method in the second aspect or any possible implementation of the second aspect.

In a ninth aspect, a wireless communication device is provided. The network device includes a memory, a processor, an input interface, and an output interface. The memory, the processor, the input interface, and the output interface are connected through a bus system. The memory is used for storing instructions, and the processor is used for executing the instructions stored in the memory to perform the method in the third aspect or any possible implementation of the third aspect.

In a tenth aspect, a computer storage medium is provided for storing computer software instructions for executing the method in any one of the aspects or the method in any possible implementation thereof, and the computer software instructions include programs designed for executing the aspects.

In an eleventh aspect, a computer program product is provided. The computer program product includes computer software instructions for performing the method in any one of the aspects or the method in a possible implementation thereof, and the computer software instructions may be stored in a computer storage medium.

These aspects and other aspects of the present application will be more simply understood in description of following embodiments.

### Brief Description of Drawings

FIG. 1 is a schematic diagram of a wireless communication system according to an embodiment of the present application.
FIG. 2 is a schematic flowchart of a wireless communication method according to an embodiment of the present application.
FIG. 3 is a schematic flowchart of a wireless communication method according to an embodiment of the present application.
FIG. 4 is a schematic block diagram of a network device according to an embodiment of the present application.
FIG. 5 is a schematic block diagram of a terminal device according to an embodiment of the present application.
FIG. 6 is a schematic block diagram of a communication device according to an embodiment of the present application.
FIG. 7 is a schematic block diagram of a system chip according to an embodiment of the present application.
FIG. 8 is a schematic block diagram of a communication device according to an embodiment of the present application.

### Detailed Description

Technical solutions in the embodiments of the present application will be clearly and completely described below with reference to the drawings in the embodiments of the present application.

It should be understood that the technical solutions of the embodiments of the present application may be applied to various communication systems, such as, a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, a LTE Frequency Division Duplex (FDD) system, a LTE Time Division Duplex (TDD) system, a Universal Mobile Telecommunication System (UMTS) system, a Worldwide Interoperability for Microwave Access (WiMAX) communication system, a New Radio (NR) System, or a future 5G system (also called a New Radio (NR)).

In particular, the technical solutions of the embodiments of the present application may be applied to various communication systems based on non-orthogonal multiple access technologies, such as a Sparse Code Multiple Access (SCMA) system, and a Low Density Signature (LDS) system. Of course, the SCMA system and the LDS system may also be referred to as other names in the communication field. Further, the technical solutions of the embodiments of the present application may be applied to multicarrier transmission systems employing non-orthogonal multiple access technologies, such as an Orthogonal Frequency Division Multiplexing (OFDM) system, a Filter Bank Multi-Carrier (FBMC) system, a Generalized Frequency Division Multiplexing (GFDM) system, and a Filtered OFDM (F-OFDM) system based on the non-orthogonal multiple access technologies.

A terminal device in the embodiments of the present application may refer to a user equipment (UE), an access terminal, a subscriber unit, a subscriber station, a mobile station, a mobile platform, a remote station, a remote terminal, a mobile device, a user terminal, a terminal, a wireless communication device, a user agent, or a user apparatus. An access terminal may be a cellular phone, a cordless phone, a session initiation protocol (SIP) phone, a wireless local loop (WLL) station, a personal digital assistant (PDA), a handheld device with a wireless communication function, a computing device or another processing device connected to a wireless modem, an on-board device, a wearable device, a terminal device in a future 5G network, or a terminal device in a future evolved Public Land Mobile Network (PLMN), etc., which is not restricted in the embodiments of the present application.

A network device in the embodiments of the present application may be a device for communicating with a terminal device, the network device may be a Base Transceiver Station (BTS) in a GSM system or a CDMA system, or may be a NodeB (NB) in a WCDMA system, or may be an Evolutional NodeB(eNB or eNodeB) in a LTE system, or may be a radio controller in a scenario of a Cloud Radio Access Network (CRAN), or the network device may be a relay station, an access point, an on-board device, or a wearable device, a network device in a future 5G network or a network device in a future evolved Public Land Mobile Network (PLMN), etc., which is not restricted in the embodiments of the present application.

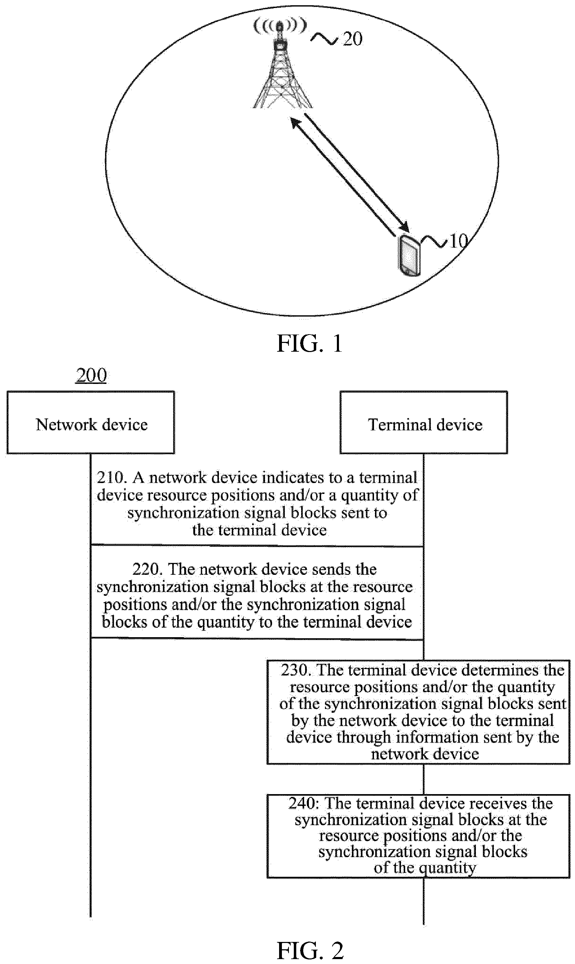

FIG. 1 is a schematic diagram of an application scenario according to an embodiment of the present application. A communication system in FIG. 1 may include a terminal device 10 and a network device 20. The network device 20 is used for providing communication services for the terminal device 10 and accessing to a core network. The terminal device 10 accesses a network by searching for a synchronization signal, or a broadcast signal, etc., sent by the network device 20 to communicate with the network. Arrows shown in FIG. 1 may represent uplink/downlink transmission through cellular links between the terminal device 10 and the network device 20.

In a NR communication system, designs such as a multi-antenna array and a beam forming are introduced. For example, an original cell is covered by multiple beams, a beam gain may compensate for reduction of coverage caused by using a high frequency band to some extent, and may reduce mutual interferences and enhance system performance.

A synchronization signal block (SS Block) is introduced in a NR, which mainly consists of a primary synchronization signal (PSS) and a secondary synchronization signal (SSS). Some SS Blocks may further include a Physical Broadcast Channel (PBCH), and may even include a third type of a synchronization signal. The embodiments of the present application do not limit types of signals included in an SS block.

Optionally, a synchronization signal may take an SS Block as a minimum unit.

Optionally, for different synchronization signal blocks, different sending beams may be used for sending.

Optionally, in an initial access, a UE first measures SS blocks and selects an SS block with better (or the best) quality as an access target. Subsequent downlink transmission (e.g. Msg2) is expected to be transmitted through a beam corresponding to the selected SS block. To achieve this aim, the UE needs to tell a network device which SS block (i.e. which beam) the UE has selected. The network device may associate the SS block with a group of Random Access Channel (RACH) resources/random access preamble indices.

For example, there are two SS blocks, denoted as S0 and S1, respectively corresponding to two groups (denoted as group 0 and group 1) (also referred to as a set). Each group contains a subset of RACH time/frequency domain resources and/or a subset of preamble indices. Elements of the two groups have no intersection. If a UE selects one PRACH from the group 0 to perform uplink transmission at a corresponding time-frequency position, a network device will know that the UE selects SS block 0 after receiving the PRACH from the UE.

FIG. 2 is a schematic flowchart of a wireless communication method 200 according to an embodiment of the present application. The method 200 includes at least some of the following contents.

In act 210, a network device indicates to a terminal device resource positions and/or a quantity of synchronization signal blocks sent to the terminal device.

Optionally, the network device may indicate to the terminal device the resource positions and/or the quantity of synchronization signal blocks sent to the terminal device in a broadcast mode through Minimum System Information (MSI).

Optionally, the resource positions of the synchronization signal blocks may refer to positions on a system time domain resource and/or positions on a frequency domain resource.

Optionally, the resource positions of the synchronization signal blocks may refer to absolute positions of the synchronization signal blocks (e.g., frequency domain positions at which subframe or frequency).

Optionally, the resource positions of the synchronization signal blocks may refer to positions of the synchronization signal blocks relative to a reference point, for example, the reference point may be a fixed reference point or another synchronization signal block.

For example, the resource positions of the synchronization signal blocks may refer to differences in time or in frequency domain resources of the synchronization signal blocks relative to a reference synchronization signal block.

In act 220, the network device sends the synchronization signal blocks at the resource positions and/or the synchronization signal blocks of the quantity to the terminal device.

In act 230, the terminal device determines the resource positions and/or the quantity of the synchronization signal blocks sent by the network device to the terminal device through information sent by the network device.

In act 240, the terminal device receives the synchronization signal blocks at the resource positions and/or the synchronization signal blocks of the quantity.

In one implementation, the network device indicates a quantity of the synchronization signal blocks sent to the terminal device through information sent by the network device; and the terminal device receives the synchronization signal blocks of the quantity, and after receiving the synchronization signal blocks of the quantity, stops detection on a possible new synchronization signal block.

Assumed that a multi-beam system may transmit a maximum of 64 synchronization signal blocks (SS blocks), only 4 SS blocks are actually transmitted. Assumed that a terminal device currently has detected only one synchronization signal block and has read corresponding MSI. Since the terminal device knows through the MSI that a quantity of synchronization signal blocks actually transmitted by a current cell is 4, the terminal device may continue to detect. If the 4 SS blocks are detected, the terminal device may stop detection on the other 60 SS blocks, thus reducing processing and power consumption of a UE.

In one implementation, the network device indicates the resource positions and quantity of synchronization signal blocks sent to the terminal device through information sent by the network device; and the terminal device receives the synchronization signal blocks of the quantity, receives the synchronization signal blocks of the quantity only at the indicated resource positions, and stops detection on a possible synchronization signal at another position.

For example, assumed that a multi-beam system may transmit a maximum of 64 synchronization signal blocks (SS blocks), only 4 SS blocks are actually transmitted. The terminal device knows through MSI that a quantity of SS blocks actually transmitted by a current cell is 4 and also knows specific resource positions, then the terminal device may perform detection and measurement on corresponding resource positions, thus greatly reducing detection delay and power consumption.

In one implementation, the network device indicates the resource positions of synchronization signal blocks sent to the terminal device through information sent by the network device; and the terminal device receives the synchronization signal blocks only at the indicated resource positions, and stops detection on a possible synchronization signal at another position.

It should be understood that in the embodiment of the present application, indicating, by the network device, the resource positions and/or quantity of synchronization signal blocks is an implicit indication, that is, the network device originally indicates other information through which the resource positions and/or quantity of the sent synchronization signal blocks may be deduced.

Similarly, obtaining, by the terminal device, the quantity and/or resource positions of the sent synchronization signal blocks according to the indication of the network device may be deduced from other information.

Therefore, in the embodiment of the present application, the network device indicates to the terminal device the resource positions and/or quantity of synchronization signal blocks sent to the terminal device, and the terminal device may receive the synchronization signal blocks at the resource positions and/or the synchronization signal blocks of the quantity, so that it may be achieved that the terminal device does not need to perform detection on all possible synchronization signal blocks.

To understand the present application more clearly, how the network device indicates to the terminal device the resource positions and/or quantity of synchronization signal blocks sent to the terminal device will be described below in conjunction with several implementations.

In a first implementation, the network device indicates to the terminal device the resource positions and/or quantity of the sent synchronization signal blocks through first information; wherein the first information carries resource position indices of the sent synchronization signal blocks or identifiers of the sent synchronization signal blocks. Based on the first information, the terminal device may know the resource positions and/or quantity of the synchronization signal blocks sent by the network device.

Optionally, in the embodiment of the present application, the identifiers of the synchronization signal blocks may correspond to the resource positions of the synchronization signal blocks one by one, and the network device may indicate a resource position of a synchronization signal block by indicating an identifier of the synchronization signal block.

For example, assumed a multi-beam system may transmit a maximum of 64 SS blocks (a resource position of each SS block is fixed), while only 2 SS blocks are actually transmitted. Each actually transmitted SS block corresponds to one index (the index corresponds to one of positions of the 64 SS block mentioned above in some way), and the 2 SS blocks are denoted as I0 and I1. Then a specific indication mode includes Index (I0 and I1), wherein the indication information may occupy 6^{∗}2 = 12 bits. After the terminal device reads I0 and I1, the terminal device may know corresponding actual time domain positions.

It should be understood that the above description takes actually transmitted SS blocks as an example, but the present application is not limited thereto. A quantity of actually transmitted SS blocks may be another quantity. If the quantity of actually transmitted SS blocks is N, bits occupied by indication information may be 6^{∗}N.

In a second implementation, the network device indicates the resource positions and/or quantity of the synchronization signal blocks sent to the terminal device through second information; and the second information indicates the resource positions and/or the quantity of the synchronization signal blocks sent to the terminal device through indicating whether each preset transmittable synchronization signal block is sent.

Optionally, information for indicating whether the each synchronization signal block is sent in the second information is sequenced according to resource position indices of the synchronization signal blocks or identifiers of the synchronization signal blocks.

For example, assumed a multi-beam system may transmit a maximum of 64 SS blocks (a resource position of each SS block is fixed), while only 2 SS blocks are actually transmitted.

64 possible SS block transmission time domain resources may be indicated through 64 bits, and each bit corresponds to one synchronization signal block. On a corresponding bit, 1 may be used for indicating that a synchronization signal block is sent on a corresponding resource position, and 0 may be used for indicating that a synchronization signal block is not sent on a corresponding resource position. A UE may know whether a SS block is sent on a resource through a corresponding bit.

Optionally, in the above two implementations, the network device sends third information to the terminal device, wherein the third information includes configuration information, of resources for random access and/or random access preambles, corresponding to the sent synchronization signal blocks.

Specifically, the synchronization signal blocks may correspond to sets of random access resources and/or random access preambles, and the synchronization signal blocks may correspond to the sets of the random access resources and/or the random access preambles one by one. The terminal device may select a random access resource and/or random access preamble in a set of the random access resources and/or random access preambles corresponding to a synchronization signal block for random access after selecting the synchronization signal block for synchronization. Optionally, the random access preamble is sometimes referred to as a random access sequence.

For example, in the second implementation, 64 bits respectively indicate whether 64 synchronization signal blocks are sent, and if a part of the 64 synchronization signal blocks is sent, the network device may sent configuration information of random access resources and/or random access preambles corresponding to the part of the 64 synchronization signal blocks.

In a third implementation, the network device indicates to the terminal device resource positions and/or a quantity of synchronization signal blocks sent by the network device through fourth information; wherein the fourth information includes information for configuring resources and/or sequences associated with the sent synchronization signal blocks.

Optionally, the fourth information includes configuration information for configuring random access resources and/or random access preambles for random access of the terminal device, and the resources and/or sequences associated with the synchronization signal blocks are random access resources and/or random access preambles. It should be understood that the resources and/or sequences associated with the synchronization signal blocks may be other resources and/or sequences.

Specifically, the network device may configure some available sets of random access resources and/or random access preambles. When the terminal device knows which sets are configured, it may know that synchronization signal blocks corresponding to these sets are sent.

Optionally, the network device indicates positions and/or a quantity of the sent synchronization signal blocks through positions of the fourth information in a message to which the fourth information belongs.

Specifically, the network device may configure a set of random access resources and/or random access preambles through a message, and a specific position for carrying configuration information in the message may correspond to a specific synchronization signal block. For example, if there are three positions for carrying configuration information (wherein one position is used for carrying configuration information of one set of the random access resources and/or random access preambles) in the message, it indicates that three synchronization signal blocks are sent, wherein each position corresponds to one synchronization signal block.

Optionally, the network device sends fifth information to the terminal device, wherein the fifth information is used for indicating a mode of a mapping relationship between resource positions of the synchronization signal blocks and positions of the fourth information in the message to which the fourth information belongs.

Specifically, the configuration message used for configuring the sets of the random access resources and/or random access preambles includes N configuration positions, and how the N configuration positions are mapped to the synchronization signal blocks may be indicated through the fifth information.

For example, a first configuration position is mapped to a synchronization signal block with index 1, a second configuration position is mapped to a synchronization signal block with index 2, a third configuration position is mapped to a synchronization signal block with index 3, and so on. Or, a first configuration position is mapped to a synchronization signal block with index 1, a second configuration position is mapped to a synchronization signal block with index 3, a third configuration position is mapped to a synchronization signal block with index 5, and so on.

Optionally, the fourth information indicates the resource positions of and/or the quantity of the synchronization signal blocks sent to the terminal device through indicating whether each set of resources for random access and/or random access sequences is configured; wherein random access resources and/or sequences in different configured sets are different.

Optionally, information for indicating whether the each set is configured in the fourth information is sequenced in an order of indices of the sets.

For example, assumed a multi-beam system may transmit a maximum of 64 SS blocks (a resource position of each SS block is fixed), while only 2 SS blocks are actually transmitted.

64 sets of random access resources and/or random access sequences corresponding to 64 possible SS block transmissions may be indicated by 64 bits, and each bit corresponding to one set. On a corresponding bit, 1 may indicate that a set is configured, and 0 may indicate that a set is not configured. A UE may know whether a set is configured and whether a corresponding synchronization signal block is sent through a corresponding bit.

In the fourth implementation, the network device indicates to the terminal device the resource positions and/or the quantity of the sent synchronization signal blocks through information in a physical broadcast channel (PBCH), and resource position and/or sequence information of a demodulation reference signal (DMRS).

For example, another 3-bit information may be obtained through 3-bit information in a PBCH and according to a detected resource position and sequence of a DMRS (for example, there are 4 possible resource positions, two types of sequences may be sent at each resource position, 3-bit information may be obtained through a detected resource position and sequence of the demodulation reference signal (DMRS)), and the resource positions of the synchronization signal blocks may be obtained according to the 6-bit information.

Optionally, in the embodiment of the present application, the terminal device selects a synchronization signal block from detected synchronization signal blocks (e.g., selects a synchronization signal block with the best or better signal quality); and according to the selected synchronization signal block, a resource for random access and/or a random access preamble are determined; and random access is performed by using the determined resource and/or random access preamble.

Optionally, the network device receives a message sent by the terminal device in a random access procedure; the network device determines the synchronization signal block selected by the terminal device according to a resource occupied by the message sent by the terminal device in the random access procedure and/or the random access preamble included by the message sent by the terminal device in the random access procedure; and the network device sends a downlink signal which is not that of the synchronization signal block according to a transmission mode of the synchronization signal block selected by the terminal device. For example, another downlink signal may be sent according to a sending beam of the selected synchronization signal block.

Optionally, the synchronization signal blocks at different resource positions are sent through different beams.

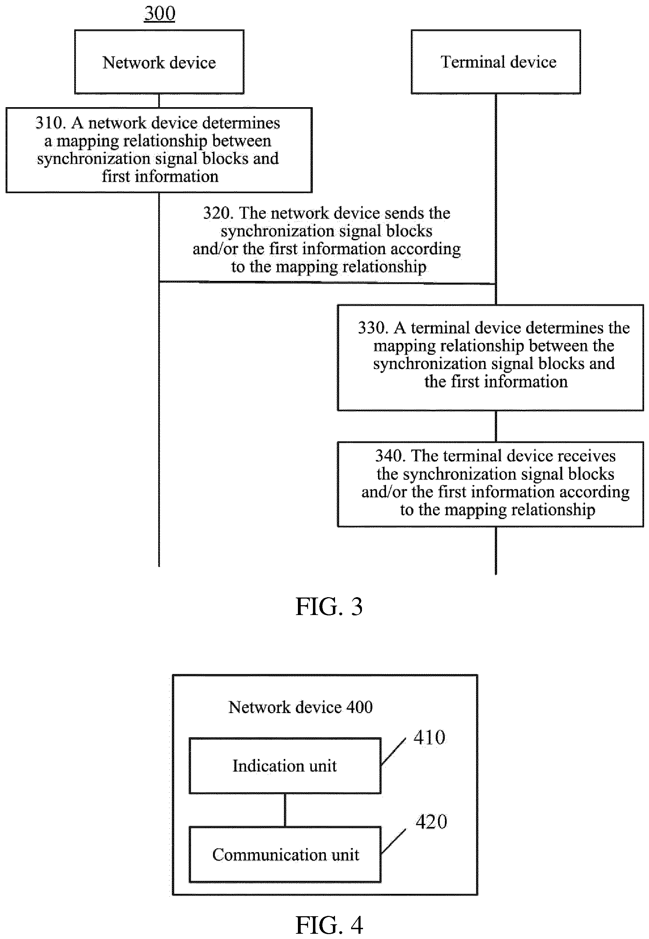

FIG. 3 is a schematic flowchart of a wireless communication method 300 according to an embodiment of the present application. The method 300 includes at least some of the following contents.

In act 310, a network device determines a mapping relationship between synchronization signal blocks and first information.

Optionally, the mapping relationship between the synchronization signal blocks and the first information refers to an association relationship between one or more aspects of the synchronization signal blocks and one or more aspects of the first information.

In act 320, the network device sends the synchronization signal blocks and/or the first information according to the mapping relationship.

In act 310, a terminal device determines the mapping relationship between the synchronization signal blocks and the first information.

In act 340, the terminal device receives the synchronization signal blocks and/or the first information according to the mapping relationship.

Therefore, in the embodiment of the present application, if the network device sends the synchronization signal blocks and/or the first information according to the mapping relationship between the synchronization signal blocks and the first information, the terminal device may receive the synchronization signal blocks and/or the first information according to the mapping relationship between the synchronization signal blocks and the first information, thus being capable of realizing an association between sending and reception of the first information and the synchronization signal blocks and improving the communication performance, for example, avoiding that the terminal receives synchronization signals at all possible positions.

Optionally, the mapping relationship is a mapping relationship between resource positions of the synchronization signal blocks and the first information.

Specifically, the mapping relationship is a mapping relationship between the resource positions of the synchronization signal blocks, and specific contents of the first information or positions of the first information in a message to which the first message belongs.

Optionally, the mapping relationship is a mapping relationship between resource positions of the synchronization signal blocks or identifiers of the synchronization signal blocks, and positions of the first information in a message to which the first information belongs.

Optionally, the first information includes configuration information for configuring random access resources and/or random access preambles for random access of the terminal device.

Specifically, the network device may configure a part of available sets of random access resources and/or random access preambles. When the terminal device knows which sets are configured, it may know that synchronization signal blocks corresponding to these sets are sent.

Specifically, the network device may configure a set of random access resources and/or random access preambles through a message, and a specific position for carrying configuration information in the message may correspond to a specific synchronization signal block. For example, if there are three positions for carrying configuration information (wherein one position is used for carrying configuration information of one set of the random access resources and/or random access preambles) in the message, it indicates that three synchronization signal blocks are sent, wherein each position corresponds to one synchronization signal block.

Optionally, the network device sends second information for indicating a mode adopted by the mapping relationship.

Optionally, the terminal device receives the second information for indicating a mode adopted by the mapping relationship.

Specifically, each configuration message for configuring the sets of random access resources and/or random access preambles includes N configuration positions, and how the N configuration positions are mapped to the synchronization signal blocks may be indicated through the fifth information.

For example, a first configuration position is mapped to a synchronization signal block with index 1, a second configuration position is mapped to a synchronization signal block with index 2, a third configuration position is mapped to a synchronization signal block with index 3, and so on. Or, a first configuration position is mapped to a synchronization signal block with index 1, a second configuration position is mapped to a synchronization signal block with index 3, a third configuration position is mapped to a synchronization signal block with index 5, and so on.

Optionally, the first information indicates whether each set of resources for random access and/or random access sequences is configured; wherein random access resources and/or sequences in different configured sets are different.

Optionally, the information for indicating whether the each set is configured in the first information is sequenced in an order of indices of the sets.

For example, assumed a multi-beam system may transmit a maximum of 64 SS blocks (a resource position of each SS block is fixed), while only 2 SS blocks are actually transmitted.

64 sets of random access resources and/or random access sequences corresponding to 64 possible SS block transmissions may be indicated by 64 bits, and each bit corresponding to one set. On a corresponding bit, 1 may indicate that a set is configured, and 0 may indicate that a set is not configured. A UE may know whether a set is configured and whether a corresponding synchronization signal block is sent through a corresponding bit.

Optionally, the first information includes information in a physical broadcast channel (PBCH) and includes resource position and/or sequence information of a demodulation reference signal (DMRS).

Optionally, in the embodiment of the present application, the terminal device selects a synchronization signal block from the detected synchronization signal blocks (e.g., selects a synchronization signal block with the best or better signal quality); and according to the selected synchronization signal block, a resource for random access and/or a random access preamble are determined; and random access is performed by using the determined resource and/or random access preamble.

Optionally, the network device receives a message sent by the terminal device in a random access procedure; the network device determines the synchronization signal block selected by the terminal device according to a resource occupied by the message sent by the terminal device in the random access procedure and/or a random access preamble included by the message sent by the terminal device in the random access procedure; and the network device sends a downlink signal which is not that of the synchronization signal block according to a transmission mode of the synchronization signal block selected by the terminal device. For example, another downlink signal may be sent according to a sending beam of the selected synchronization signal block.

Optionally, different synchronization signal blocks are sent through different beams.

It should be understood that the features in the above methods 200 and 300 may be combined without conflicts. For the sake of brevity, the embodiment of the present application will not be described repeatedly here.

FIG. 4 is a schematic block diagram of a network device 400 according to an embodiment of the present application. As shown in FIG. 4, the network device 400 includes an indication unit 410 and a communication unit 420.

The indication unit 410 is used for indicating to a terminal device resource positions and/or a quantity of synchronization signal blocks sent to the terminal device. The communication unit 420 is used for sending to the terminal device the synchronization signal blocks at the resource positions and/or the synchronization signal blocks of the quantity.

It should be understood that the network device 400 shown in FIG. 4 may perform corresponding operations performed by the network device in the method 200. Description will not be repeatedly here for brevity.

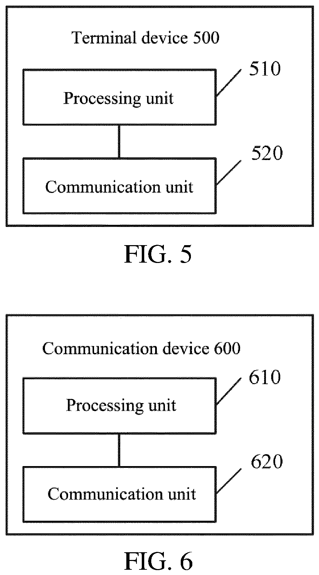

FIG. 5 is a schematic block diagram of a terminal device 500 according to an embodiment of the present application. As shown in FIG. 5, the terminal device 500 includes a processing unit 510 and a communication unit 520.

The processing unit 510 is used for determining resource positions and/or a quantity of synchronization signal blocks sent by the network device to the terminal device through information sent by the network device. The communication unit 520 is used for receiving the synchronization signal blocks at the resource positions and/or the synchronization signal blocks of the quantity.

It should be understood that the terminal device 500 shown in FIG. 5 may perform corresponding operations performed by the terminal device in the method 200. Description will not be repeatedly here for brevity.

FIG. 6 is a schematic block diagram of a wireless communication device 600 according to an embodiment of the present application. As shown in FIG. 6, the terminal device 600 includes a processing unit 610 and a communication unit 620.

The processing unit 610 is used for determining a mapping relationship between synchronization signal blocks and first information. The communication unit 620 is used for receiving or sending the synchronization signal blocks and/or the first information according to the mapping relationship.

It should be understood that the communication device 600 shown in FIG. 6 may perform corresponding operations performed by the terminal device or the network device in the method 300. Description will not be repeatedly here for brevity.

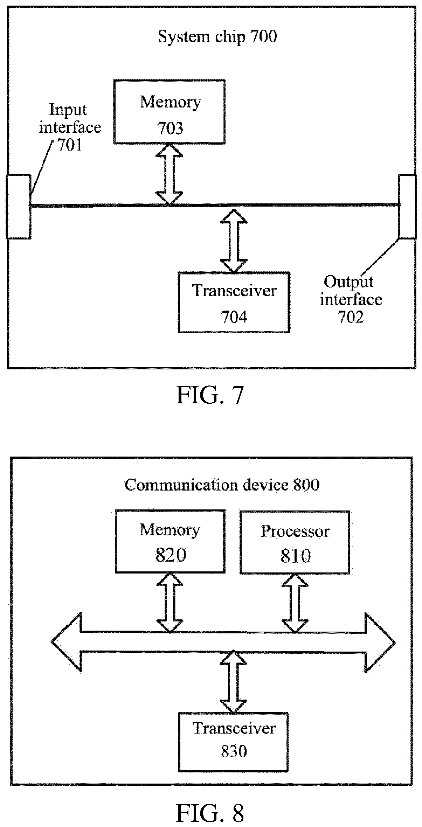

FIG. 7 is a schematic diagram of structure of a system chip 700 according to an embodiment of the present application. The system chip 700 of FIG. 7 includes an input interface 701, an output interface 702, a processor 703, and a memory 704, which could be connected through internal communication connection lines. The processor 703 is used for executing codes in the memory 604.

Optionally, when the codes are executed, the processor 703 implements the method implemented by the network device in the method embodiments. For sake of conciseness, the specific description will not be repeated here.

Optionally, when the codes are executed, the processor 703 implements the method implemented by the terminal device in the method embodiments. For sake of conciseness, the specific description will not be repeated here.

FIG. 8 is a schematic block diagram of a communication device 800 according to an embodiment of the present application. As shown in FIG. 8, the communication device 800 includes a processor 810 and a memory 820. The memory 820 may store program codes, and the processor 810 may execute the program codes stored in the memory 820.

Optionally, as shown in FIG. 8, the communication device 800 may include a transceiver 830, and the processor 810 may control the transceiver 830 to communicate with the external.

Optionally, the processor 810 may call the program codes stored in the memory 820 to perform corresponding operations of the network device in the method embodiments, which will not be described here repeatedly for brevity.

Optionally, the processor 810 may call the program codes stored in the memory 820 to perform corresponding operations of the terminal device in the method embodiments, which will not be described here repeatedly for brevity.

It should be understood that the processor in an embodiment of the present application may be an integrated circuit chip with a capability for processing signals. In a implementation process, the acts of the method embodiments may be completed by integrated logic circuits of hardware in the processor or instructions in a form of software. The processor may be a general purpose processor, a digital signal processor (DSP), an application specific integrated circuit (ASIC), a field programmable gate array (FPGA), or another programmable logic device, a discrete gate or a transistor logic device, or a discrete hardware component. The processor may implement various methods, acts and logic block diagrams disclosed in the embodiments of the present application. The general purpose processor may be a microprocessor or the processor may be any conventional processor or the like. The acts of the method disclosed in connection with the embodiments of the present application may be directly embodied by execution of a hardware decoding processor, or by execution of a combination of hardware and software modules in a decoding processor. The software modules may be located in a storage medium commonly used in the art, such as a random access memory, a flash memory, a read-only memory, a programmable read-only memory, or an electrically erasable programmable memory, or a register. The storage medium is located in the memory, and the processor reads information in the memory and completes the acts of the method in combination with its hardware.

It should be understood that the memory in the embodiments of the present application may be a transitory memory or a non-transitory memory, or may include both a transitory memory and a non-transitory memory. The non-transitory memory may be a read-only memory (ROM), a programmable ROM (PROM), an erasable programmable ROM (EPROM), an electrically erasable programmable ROM (EEPROM), or a flash memory. The transitory memory may be a random access memory (RAM) which serves as an external high-speed cache. As an example, but not as a limitation, many forms of RAMs are available, such as a static random access memory (SRAM), a dynamic random access memory (DRAM), a synchronous dynamic random access memory (SDRAM), a double data rate SDRAM (DDR SDRAM), an enhanced SDRAM (ESDRAM), a Synchlink DRAM (SLDRAM), and a Direct Rambus RAM (DR RAM). It should be noted that memories of the systems and methods described herein are intended to include, but are not limited to, these and any other suitable types of memories.

Those of ordinary skill in the art will recognize that the example units and algorithm acts described in connection with the embodiments disclosed herein may be implemented in electronic hardware, or a combination of computer software and electronic hardware. Whether these functions are implemented in hardware or software depends on a specific application and design constraint of the technical solutions. Skilled in the art may use different methods to realize the described functions for each particular application, but such realization should not be considered to be beyond the scope of the present application.

Those skilled in the art may clearly understand that for convenience and conciseness of description, the specific working processes of the systems, apparatuses and units described above may refer to the corresponding processes in the aforementioned embodiments of methods, and details are not described herein again.

In several embodiments provided by the present application, it should be understood that the disclosed systems, apparatuses and methods may be implemented in other ways. For example, the apparatus embodiments described above are only illustrative, for another example, the division of the units is only a logical function division, and there may be other division manners in actual realization. For still another example, multiple units or components may be combined or integrated into another system, or some features may be ignored or not executed. On the other hand, the mutual coupling or direct coupling or communication connection shown or discussed may be indirect coupling or communication connection through some interfaces, apparatuses or units, and may be in electrical, mechanical or other forms.

The units described as separated components may or may not be physically separated, and the component shown as a unit may or may not be a physical unit, i.e., it may be located in one place or may be allocated over multiple network units. Some or all of the units may be selected according to practical needs to achieve purposes of the solutions of the embodiments.

In addition, various functional units in various embodiments of the present application may be integrated in one processing unit, or various units may be physically present separately, or two or more units may be integrated in one unit.

The functions may be stored in a computer readable storage medium if implemented in a form of a software functional unit and sold or used as a separate product. Based on this understanding, the technical solutions of the present application, in essence, or the part contributing to the existing art, or the part of the technical solutions, may be embodied in a form of a software product stored in a storage medium, including several instructions for causing a computer device (which may be a personal computer, a server, or a network device, etc.) to perform all or part of the acts of the methods described in various embodiments of the present application. The aforementioned storage medium includes various medium capable of storing program codes, such as a U disk, a mobile hard disk, a read-only memory (ROM), a random access memory (RAM), a magnetic disk, or an optical disk.

The foregoing are merely example embodiments of the present application, but the protection scope of the present application is not limited thereto. Any person skilled in the art may easily conceive variations or substitutions within the technical scope disclosed by the present application, which should be included within the protection scope of the present application. Therefore, the protection scope of the present application should be subject to the protection scope of the claims.

## Claims

1. A wireless communication method, comprising:
indicating, by a network device, to a terminal device resource positions and/or a quantity of synchronization signal blocks sent to the terminal device; and
sending, by the network device, the synchronization signal blocks at the resource positions and/or the synchronization signal blocks of the quantity to the terminal device.

2. The method according to claim 1, wherein indicating, by the network device, to the terminal device the resource positions and/or the quantity of the synchronization signal blocks sent to the terminal device, comprises:
indicating, by the network device, to the terminal device the resource positions and/or the quantity of the sent synchronization signal blocks through first information;
wherein the first information carries resource position indices of the sent synchronization signal blocks or identifiers of the sent synchronization signal blocks.

3. The method according to claim 1, wherein indicating, by the network device, to the terminal device the resource positions and/or the quantity of the synchronization signal blocks sent to the terminal device, comprises:
indicating, by the network device, to the terminal device the resource positions and/or the quantity of the sent synchronization signal blocks through second information;
wherein the second information indicates the resource positions and/or the quantity of the synchronization signal blocks sent to the terminal device through indicating whether each preset transmittable synchronization signal block is sent.

4. The method according to claim 3, wherein information for indicating whether the each synchronization signal block is sent in the second information is sequenced according to resource position indices of the synchronization signal blocks or identifiers of the synchronization signal blocks.

5. The method according to any one of claims 2-4, wherein the method further comprises:
sending, by the network device, third information to the terminal device, wherein the third information comprises configuration information, of resources for random access and/or random access preambles, corresponding to the sent synchronization signal blocks.

6. The method according to claim 1, wherein indicating, by the network device, to the terminal device the resource positions and/or the quantity of the synchronization signal blocks sent to the terminal device, comprises:
indicating, by the network device, to the terminal device the resource positions and/or the quantity of the sent synchronization signal blocks through fourth information; wherein the fourth information comprises information for configuring resources and/or sequences associated with the sent synchronization signal blocks.

7. The method according to claim 6, wherein the network device indicates positions and/or the quantity of the sent synchronization signal blocks through positions of the fourth information in a message to which the fourth information belongs.

8. The method according to claim 7, wherein the method further comprises:
sending, by the network device, fifth information to the terminal device, wherein the fifth information is for indicating a mode of a mapping relationship between the resource positions of the synchronization signal blocks and the positions of the fourth information in the message to which the fourth information belongs.

9. The method according to any one of claims 6-8, wherein the fourth information comprises configuration information for configuring random access resources and/or random access preambles for random access of the terminal device, and the resources and/or sequences associated with the synchronization signal blocks are random access resources and/or random access preambles.

10. The method according to claim 9, wherein the fourth information indicates the resource positions of and/or the quantity of the synchronization signal blocks sent to the terminal device through indicating whether each set of resources for random access and/or random access sequences is configured;
wherein random access resources and/or sequences in different configured sets are different.

11. The method according to claim 10, wherein information for indicating whether the each set is configured in the fourth information is sequenced in an order of indices of the sets.

12. The method according to claim 1, wherein indicating, by the network device, to the terminal device the resource positions and/or the quantity of the synchronization signal blocks sent to the terminal device, comprises:
indicating, by the network device, to the terminal device the resource positions and/or the quantity of the sent synchronization signal blocks through information in a physical broadcast channel (PBCH) and a resource position and/or sequence information of a demodulation reference signal (DMRS).

13. The method according to any one of claims 1-12, wherein the method further comprises:
receiving, by the network device, a message sent by the terminal device in a random access procedure;
determining, by the network device, a synchronization signal block selected by the terminal device according to a resource occupied by the message sent by the terminal device in the random access procedure and/or a random access preamble comprised in the message sent by the terminal device in the random access procedure; and
sending, by the network device, a downlink signal which is not that of the synchronization signal block according to a sending mode of the synchronization signal block selected by the terminal device.

14. The method according to claim 13, wherein the synchronization signal blocks at different resource positions are sent through different beams.

15. A wireless communication method, comprising:
determining, by a terminal device, resource positions and/or a quantity of synchronization signal blocks sent by a network device to the terminal device through information sent by the network device; and
receiving, by the terminal device, the synchronization signal blocks at the resource positions and/or the synchronization signal blocks of the quantity.

16. The method according to claim 15, wherein the network device indicates the quantity of the synchronization signal blocks sent to the terminal device through the sent information;
receiving, by the terminal device, the synchronization signal blocks at the resource positions and/or the synchronization signal blocks of the quantity, comprises:
receiving, by the terminal device, the synchronization signal blocks of the quantity, and after receiving the synchronization signal blocks of the quantity, stopping detection on a possible new synchronization signal block.

17. The method according to claim 15, wherein the network device indicates the resource positions and the quantity of the synchronization signal blocks sent to the terminal device through the sent information;
receiving, by the terminal device, the synchronization signal blocks at the resource positions and/or the synchronization signal blocks of the quantity, comprises:
receiving, by the terminal device, the synchronization signal blocks of the quantity, and receiving the synchronization signal blocks of the quantity only at the indicated resource positions, and stopping detection on a possible synchronization signal at another position.

18. The method according to any one of claims 15-17, wherein the method further comprises:
receiving, by the terminal device, first information sent by the network device;
wherein determining, by the terminal device, the resource positions and/or the quantity of the synchronization signal blocks sent by the network device to the terminal device through the information sent by the network device, comprises:
determining, by the terminal device, the resource positions and/or the quantity of the synchronization signal blocks sent by the network device to the terminal device according to the first information;
wherein the first information carries resource position indices of the synchronization signal blocks or identifiers of the synchronization signal blocks sent by the network device.

19. The method according to any one of claims 15-17, wherein the method further comprises:
receiving, by the terminal device, second information sent by the network device;
wherein determining, by the terminal device, the resource positions and/or the quantity of the synchronization signal blocks sent by the network device to the terminal device through the information sent by the network device, comprises:
determining, by the terminal device, the resource positions and/or the quantity of the synchronization signal blocks sent by the network device to the terminal device according to the second information;
wherein the second information indicates the resource positions and/or the quantity of the synchronization signal blocks sent to the terminal device through indicating whether each preset transmittable synchronization signal block is sent.

20. The method according to claim 19, wherein information for indicating whether the each synchronization signal block is sent in the second information is sequenced according to resource position indices of the synchronization signal blocks or identifiers of the synchronization signal blocks.

21. The method according to any one of claims 15-20, wherein the method further comprises:
receiving, by the terminal device, third information sent by the network device, wherein the third information comprises configuration information, of resources for random access and/or random access preambles, corresponding to the synchronization signal blocks sent by the network device; and
performing, by the network device, random access according to the configuration information.

22. The method according to any one of claims 15-17, wherein the method further comprises:
receiving, by the terminal device, fourth information sent by the network device;
wherein determining, by the terminal device, the resource positions and/or the quantity of the synchronization signal blocks sent by the network device to the terminal device through the information sent by the network device, comprises:
determining, by the terminal device, the resource positions and/or the quantity of the synchronization signal blocks sent by the network device to the terminal device according to the fourth information;
wherein the fourth information comprises information for configuring resources and/or sequences associated with the sent synchronization signal blocks.

23. The method according to claim 22, wherein the network device indicates the positions and/or the quantity of the sent synchronization signal blocks through positions of the fourth information in a message to which the fourth information belongs.

24. The method according to claim 23, wherein the method further comprises:
receiving, by the terminal device, fifth information sent by the network device, wherein the fifth information is for indicating a mode of a mapping relationship between the resource positions of the synchronization signal blocks and the positions of the fourth information in the message to which the fourth information belongs; and
determining the mapping relationship according to the fifth information.

25. The method according to any one of claims 22-24, wherein the fourth information comprises configuration information for configuring random access resources and/or random access preambles for random access of the terminal device, and the resources and/or sequences associated with the synchronization signal blocks are random access resources and/or random access preambles.

26. The method according to claim 25, wherein the fourth information indicates the resource positions of and/or the quantity of the synchronization signal blocks sent to the terminal device through indicating whether each set of resources for random access and/or random access sequences is configured;
wherein random access resources and/or sequences in different configured sets are different.

27. The method according to claim 26, wherein information for indicating whether the each set is configured in the fourth information is sequenced in an order of indices of the sets.

28. The method according to any one of claims 15-17, wherein determining, by the terminal device, the resource positions and/or the quantity of the synchronization signal blocks sent by the network device to the terminal device through indication of the network device, comprises:
determining, by the terminal device, the resource positions and/or the quantity of the synchronization signal blocks sent by the network device to the terminal device according to information in a physical broadcast channel (PBCH) and a resource position and/or sequence information of a demodulation reference signal (DMRS) sent by the network device.

29. The method according to any one of claims 15-28, wherein the method further comprises:
selecting a synchronization signal block from detected synchronization signal blocks;
determining a resource for random access and/or a random access preamble according to the selected synchronization signal block; and
performing random access by using the determined resource and/or random access preamble.

30. The method according to claim 29, wherein the synchronization signal blocks at different resource positions are sent through different beams.

31. A wireless communication method, comprising:
determining a mapping relationship between synchronization signal blocks and first information; and
receiving or sending the synchronization signal blocks and/or the first information according to the mapping relationship.

32. The method according to claim 31, wherein the mapping relationship is a mapping relationship between resource positions of the synchronization signal blocks and the first information.

33. The method according to claim 31 or 32, wherein the mapping relationship is a mapping relationship between resource positions of the synchronization signal blocks or identifiers of the synchronization signal blocks and positions of the first information in a message to which the first information belongs.

34. The method according to claim 33, wherein the method is performed by a network device; and
the method further comprises: sending second information for indicating a mode adopted by the mapping relationship.

35. The method according to claim 33, wherein the method is performed by a terminal device; and
the method further comprises:
receiving second information for indicating a mode adopted by the mapping relationship.

36. The method according to any one of claims 31-35, wherein the first information comprises configuration information for configuring random access resources and/or random access preambles for random access of the terminal device.

37. The method according to claim 36, wherein the first information indicates whether each set of resources for random access and/or random access sequences is configured;
wherein random access resources and/or sequences in different configured sets are different.

38. The method according to claim 37, wherein information for indicating whether the each set is configured in the first information is sequenced in an order of indices of the sets.

39. The method according to claim 31 or 32, wherein the first information comprises information in a physical broadcast channel (PBCH) and comprises a resource position and/or sequence information of a demodulation reference signal (DMRS).

40. The method according to any one of claims 31-39, wherein the method is performed by a terminal device, and the method further comprises:
selecting a synchronization signal block from detected synchronization signal blocks;
determining a resource for random access and/or a random access preamble according to the selected synchronization signal block; and
performing random access by using the determined resource and/or random access preamble.

41. The method according to any one of claims 31-39, wherein the method is performed by a network device, and the method further comprises:
receiving, by the network device, a message sent by the terminal device in a random access procedure;
determining, by the network device, a synchronization signal block selected by the terminal device according to a resource occupied by the message sent by the terminal device in the random access procedure and/or a random access preamble comprised in the message sent by the terminal device in the random access procedure;
sending, by the network device, a downlink signal which is not that of the synchronization signal block according to a sending mode of the synchronization signal block selected by the terminal device.

42. The method according to claim 40 or 41, wherein different synchronization signal blocks are sent through different beams.

43. A network device, comprising: an indication unit and a communication unit; wherein
the indication unit is configured to indicate to a terminal device resource positions and/or a quantity of synchronization signal blocks sent to the terminal device; and
the communication unit is configured to send the synchronization signal blocks at the resource positions and/or the synchronization signal blocks of the quantity to the terminal device.

44. The network device according to claim 43, wherein the indication unit is further configured to:
indicate to the terminal device the resource positions and/or the quantity of the sent synchronization signal blocks through first information;
wherein the first information carries resource position indices of the sent synchronization signal blocks or identifiers of the sent synchronization signal blocks.

45. The network device according to claim 43, wherein the indication unit is further configured to:
indicate to the terminal device the resource positions and/or the quantity of the sent synchronization signal blocks through second information;
wherein the second information indicates the resource positions and/or the quantity of the synchronization signal blocks sent to the terminal device through indicating whether each preset transmittable synchronization signal block is sent.

46. The network device according to claim 45, wherein information for indicating whether the each synchronization signal block is sent in the second information is sequenced according to resource position indices of the synchronization signal blocks or identifiers of the synchronization signal blocks.

47. The network device according to any one of claims 44-46, wherein the communication unit is further configured to:
send third information to the terminal device, wherein the third information comprises configuration information, of resources for random access and/or random access preambles, corresponding to the sent synchronization signal blocks.

48. The network device according to claim 43, wherein the indication unit is further configured to:
indicate to the terminal device the resource positions and/or the quantity of the sent synchronization signal blocks through fourth information; wherein the fourth information comprises information for configuring resources and/or sequences associated with the sent synchronization signal blocks.

49. The network device according to claim 48, wherein the indication unit indicates positions and/or the quantity of the sent synchronization signal blocks through positions of the fourth information in a message to which the fourth information belongs.

50. The network device according to claim 49, wherein the indication unit is further configured to:
send fifth information to the terminal device, wherein the fifth information is for indicating a mode of a mapping relationship between the resource positions of the synchronization signal blocks and positions of the fourth information in the message to which the fourth information belongs.

51. The network device according to any one of claims 48-50, wherein the fourth information comprises configuration information for configuring random access resources and/or random access preambles for random access of the terminal device, and the resources and/or sequences associated with the synchronization signal blocks are random access resources and/or random access preambles.

52. The network device according to claim 51, wherein the fourth information indicates the resource positions and/or the quantity of the synchronization signal blocks sent to the terminal device through indicating whether each set of resources for random access and/or random access sequences is configured;
wherein random access resources and/or sequences in different configured sets are different.

53. The network device according to claim 52, wherein information for indicating whether the each set is configured in the fourth information is sequenced in an order of indices of the sets.

54. The network device according to claim 43, wherein the indication unit is further configured to:
indicate to the terminal device the resource positions and/or the quantity of the sent synchronization signal blocks through information in a physical broadcast channel (PBCH) and a resource position and/or sequence information of a demodulation reference signal (DMRS).

55. The network device according to any one of claims 43-54, wherein the communication unit is further configured to:
receive a message sent by the terminal device in a random access procedure;
determine a synchronization signal block selected by the terminal device according to a resource occupied by the message sent by the terminal device in the random access procedure and/or a random access preamble comprised in the message sent by the terminal device in the random access procedure; and
send a downlink signal which is not that of the synchronization signal block according to a sending mode of the synchronization signal block selected by the terminal device.

56. The network device according to claim 55, wherein the synchronization signal blocks at different resource positions are sent through different beams.

57. A terminal device, comprising: a processing unit and a communication unit; wherein
the processing unit is configured to determine resource positions and/or a quantity of synchronization signal blocks sent by a network device to the terminal device through information sent by the network device; and
the communication unit is configured to receive the synchronization signal blocks at the resource positions and/or the synchronization signal blocks of the quantity.

58. The terminal device according to claim 57, wherein the information sent by the network device indicates the quantity of the synchronization signal blocks sent to the terminal device;
the communication unit is further configured to:
receive the synchronization signal blocks of the quantity, and stop detection on a possible new synchronization signal block after receiving the synchronization signal blocks of the quantity.

59. The terminal device according to claim 57, wherein the information sent by the network device indicates the resource positions and the quantity of the synchronization signal blocks sent to the terminal device;
the communication unit is further configured to:
receive the synchronization signal blocks of the quantity, receive the synchronization signal blocks of the quantity only at the indicated resource positions, and stop detection on a possible synchronization signal at another position.

60. The terminal device according to any one of claims 57-59, wherein,
the communication unit is further configured to receive first information sent by the network device;
the processing unit is further configured to:
determine the resource positions and/or the quantity of the synchronization signal blocks sent by the network device to the terminal device according to the first information;
wherein the first information carries resource position indices of the synchronization signal blocks or identifiers of the synchronization signal blocks sent by the network device.

61. The terminal device according to any one of claims 57-59, wherein the communication unit is further configured to:
receive second information sent by the network device;
the processing unit is further configured to:
determine the resource positions and/or the quantity of the synchronization signal blocks sent by the network device to the terminal device according to the second information;
wherein the second information indicates the resource positions and/or the quantity of the synchronization signal blocks sent to the terminal device through indicating whether each preset transmittable synchronization signal block is sent.

62. The terminal device according to claim 61, wherein information for indicating whether the each synchronization signal block is sent in the second information is sequenced according to resource position indices of the synchronization signal blocks or identifiers of the synchronization signal blocks.

63. The terminal device according to any one of claims 57-62, wherein the communication unit is further configured to:
receive third information sent by the network device, wherein the third information comprises configuration information, of resources for random access and/or random access preambles, corresponding to the synchronization signal blocks sent by the network device; and
the processing unit is further configured to:
perform random access according to the configuration information.

64. The terminal device according to any one of claims 57-59, wherein,
the communication unit is further configured to receive fourth information sent by the network device;
the processing unit is further configured to:
determine the resource positions and/or the quantity of the synchronization signal blocks sent by the network device to the terminal device according to the fourth information;
wherein the fourth information comprises information for configuring resources and/or sequences associated with the sent synchronization signal blocks.

65. The terminal device according to claim 64, wherein the network device indicates positions and/or the quantity of the sent synchronization signal blocks through positions of the fourth information in a message to which the fourth information belongs.

66. The terminal device according to claim 65, wherein the communication unit is further configured to:
receive fifth information sent by the network device, wherein the fifth information is for indicating a mode of a mapping relationship between the resource positions of the synchronization signal blocks and the positions of the fourth information in the message to which the fourth information belongs; and
the processing unit is further configured to determine the mapping relationship according to the fifth information.

67. The terminal device according to any one of claims 64-66, wherein the fourth information comprises configuration information for configuring random access resources and/or random access preambles for random access of the terminal device, and the resources and/or sequences associated with the synchronization signal blocks are random access resources and/or random access preambles.

68. The terminal device according to claim 67, wherein the fourth information indicates the resource positions of and/or the quantity of the synchronization signal blocks sent to the terminal device through indicating whether each set of resources for random access and/or random access sequences is configured;
wherein random access resources and/or sequences in different configured sets are different.

69. The terminal device according to claim 68, wherein information for indicating whether the each set is configured in the fourth information is sequenced in an order of indices of the sets.

70. The terminal device according to any one of claims 57-59, wherein the processing unit is further configured to:
determine the resource positions and/or the quantity of the synchronization signal blocks sent by the network device to the terminal device according to information in a physical broadcast channel (PBCH) and a resource position and/or sequence information of a demodulation reference signal (DMRS) sent by the network device.

71. The terminal device according to any one of claims 57-70, wherein the processing unit is further configured to:
select a synchronization signal block from detected synchronization signal blocks;
determine a resource for random access and/or a random access preamble according to the selected synchronization signal block; and
perform random access by using the determined resource and/or random access preamble.

72. The terminal device according to claim 71, wherein the synchronization signal blocks at different resource positions are sent through different beams.

73. A wireless communication device, comprising: a processing unit and a communication unit; wherein
the processing unit is configured to determine a mapping relationship between synchronization signal blocks and first information; and
the communication unit is configured to receive or send the synchronization signal blocks and/or the first information according to the mapping relationship.

74. The device according to claim 73, wherein the mapping relationship is a mapping relationship between resource positions of the synchronization signal blocks and the first information.

75. The device according to claim 73 or 74, wherein the mapping relationship is a mapping relationship between resource positions of the synchronization signal blocks or identifiers of the synchronization signal blocks and positions of the first information in a message to which the first information belongs.

76. The device according to claim 75, wherein the device is a network device; and
the communication unit is further configured to send second information for indicating a mode adopted by the mapping relationship.

77. The device according to claim 75, wherein the device is a terminal device; and
the communication unit is further configured to:
receive second information for indicating a mode adopted by the mapping relationship.

78. The device according to any one of claims 73-77, wherein the first information comprises configuration information for configuring random access resources and/or random access preambles for random access of a terminal device.

79. The device according to claim 78, wherein the first information indicates whether each set of resources for random access and/or random access sequences is configured;
wherein random access resources and/or sequences in different configured sets are different.

80. The device according to claim 79, wherein information for indicating whether the each set is configured in the first information is sequenced in an order of indices of the sets.

81. The device according to claim 73 or 74, wherein the first information comprises information in a physical broadcast channel (PBCH) and a resource position and/or sequence information of a demodulation reference signal (DMRS).

82. The device according to any one of claims 73-81, wherein the device is a terminal device, and the processing unit is further configured to:
select a synchronization signal block from detected synchronization signal blocks;
determine a resource for random access and/or a random access preamble according to the selected synchronization signal block; and
perform random access by using the determined resource and/or random access preamble.

83. The device according to any one of claims 73-81, wherein the device is a network device; and
the communication unit is further configured to receive a message sent by a terminal device in a random access procedure;
the processing unit is further configured to determine a synchronization signal block selected by the terminal device according to a resource occupied by the message sent by the terminal device in the random access procedure and/or a random access preamble comprised in the message sent by the terminal device in the random access procedure;
the communication unit is further configured to send a downlink signal which is not that of the synchronization signal block according to a sending mode of the synchronization signal block selected by the terminal device.

84. The device according to claim 82 or 83, wherein different synchronization signal blocks are sent through different beams.
